# EUROPÄISCHE PATENTSCHRIFT

(11) **EP 2 784 195 B1**
(45) Veröffentlichungstag und Bekanntmachung des Hinweises auf die Patenterteilung: **23.03.2016**
(21) Anmeldenummer: 14161382.8
(22) Anmeldetag: 25.03.2014
(51) Int. Cl.: D01H 13/00, D01H 13/02, H02K 16/02, D01H 1/22

(54) **Antriebsanordnung einer Spinnereivorbereitungsmaschine**
Drive assembly for a spinning preparation machine
Dispositif d'entraînement d'une machine de préparation de filature

(30) Priorität: 28.03.2013 DE 102013103177
(43) Veröffentlichungstag der Anmeldung: 01.10.2014
(73) Patentinhaber: Rieter Ingolstadt GmbH, 85055 Ingolstadt (DE)
(72) Erfinder: Strobel, Michael, 85072 Eichstätt (DE); Brunner, Armin, 84094 Elsendorf (DE)
(74) Vertreter: Baudler, Ron

(56) Entgegenhaltungen:
- BE-A- 429 827
- CH-A- 465 454
- DE-A1-102007 026 158
- US-A- 3 015 203

## Beschreibung

Die vorliegende Erfindung betrifft eine Antriebsanordnung einer Spinnereivorbereitungsmaschine, beispielsweise einer Strecke, wobei die Spinnereivorbereitungsmaschine ein Streckwerk mit mehreren Streckwerkswalzen zum Verstrecken eines die Spinnereivorbereitungsmaschine in einer Transportrichtung passierenden Faserverbands aufweist, wobei die Antriebsanordnung einen Antrieb in Form eines Doppelwellenmotors umfasst, wobei der Doppelwellenmotor einen ersten Wellenabschnitt und einen zweiten Wellenabschnitt umfasst, wobei die Spinnereivorbereitungsmaschine eine oder mehrere dem Streckwerk in der genannten Transportrichtung räumlich vorgelagerte Funktionseinheiten umfasst, die während des Betriebs der Spinnereivorbereitungsmaschine zumindest teilweise dem Transport und/oder der Führung des Faserverbands dienen. Ferner wird eine Antriebsanordnung einer Spinnereivorbereitungsmaschine, beispielsweise einer Strecke, vorgeschlagen, wobei die Spinnereivorbereitungsmaschine ein Streckwerk mit mehreren Streckwerkswalzen zum Verstrecken eines die Spinnereivorbereitungsmaschine in einer Transportrichtung passierenden Faserverbands aufweist, und wobei die Antriebsanordnung einen ersten Antrieb zum Antrieb wenigstens einer der Streckwerkswalzen umfasst.

Gattungsgemäße Spinnereivorbereitungsmaschinen sind im Stand der Technik beispielsweise in Form von Strecken (Einzelkopf- oder Mehrkopfstrecken) bekannt, wobei in der Regel ein zentraler Antrieb für die jeweiligen anzutreibenden Bauteile (Streckwerkswalzen, Ablageteller, sonstige Funktionseinheiten) vorgesehen ist, siehe DE-A- 10 2007 026158.

Alternativ wurde bereits ebenfalls vorgeschlagen, einzelne der genannten Bauteile oder entsprechende Bauteilgruppen mit entsprechenden Einzelantrieben anzutreiben, da hierdurch die Motorengröße verringert und die Steuerungs- und/oder Regelmöglichkeiten der jeweiligen Drehzahlen verbessert werden kann.

Nachteil einer derartigen Lösung ist jedoch, dass die Drehzahlen stets äußerst genau aufeinander abgestimmt werden müssen, um beispielsweise im Fall des Antriebs der einzelnen Streckwerkswalzen den gewünschten Verzug des die Spinnereivorbereitungsmaschine passierenden Faserverbands einzuhalten. Insbesondere die Einhaltung der jeweiligen Drehzahlverhältnisse ist beim Einsatz mehrerer Einzelantriebe in der Regel aufwändiger als bei der Verwendung eines einzigen Zentralantriebs.

Aufgabe der vorliegenden Erfindung ist es daher, eine Antriebsanordnung für eine gattungsgemäße Spinnereivorbereitungsmaschine vorzuschlagen, welche die genannten Nachteile vermeidet.

Die Aufgabe wird gelöst durch eine Antriebsanordnung mit den Merkmalen der unabhängigen Patentansprüche 1 und 11.

Erfindungsgemäß umfasst die Antriebsanordnung gemäß einem ersten Aspekt der Erfindung einen Antrieb in Form eines Doppelwellenmotors, wobei der erste Wellenabschnitt des Doppelwellenmotors mit zumindest einer der Streckwerkswalzen des Streckwerks und der zweite Wellenabschnitt mit wenigstens einer der Funktionseinheiten der Spinnereivorbereitungsmaschine antriebsmäßig in Verbindung steht. Bei den Funktionseinheiten handelt es sich um noch näher zu beschreibende angetriebene Bauteile oder Bauteilgruppen, die der Führung bzw. Handhabung des Faserverbands dienen und die sich in Transportrichtung vor dem Streckwerk befinden. Ferner sei an dieser Stelle betont, dass es sich bei den genannten Wellenabschnitten um Abschnitte einer einzigen, den Antrieb (d. h. in der Regel einen Elektromotor) durchziehenden, Antriebswelle handeln kann. Alternativ ist es ebenso möglich, dass der Antrieb zwei Antriebswellen besitzt, die seitlich aus dem Antrieb herausragen, so dass es sich bei den Wellenabschnitten um Abschnitte auf separaten Bauteilen handelt.

Der Vorteil der genannten Antriebsanordnung liegt nun in der Tatsache, dass die von den jeweiligen Wellenabschnitten angetriebenen Bauteile/Bauteilgruppen stets in einem konstanten Drehzahlverhältnis angetrieben werden, da die Drehzahlen der beiden Wellenabschnitte identisch oder deren Verhältnis zumindest konstant ist.

Besondere Vorteile bringt es mit sich, wenn es sich bei einer der Funktionseinheiten um eine Abzugsanordnung zum Abzug des Faserverbands aus einer oder mehreren Spinnkannen handelt. Die Abzugsanordnung kann Abzugsrollen umfassen, die den Faserverband führen und hierbei aus der entsprechenden Spinnkanne abziehen und in Richtung des Streckwerks der Spinnereivorbereitungsmaschine fördern. Ferner kann die Spinnereivorbereitungsmaschine eine Funktionseinheit in Form einer Bandeinzugsanordnung aufweisen, die zwischen der Abzugsanordnung und dem Streckwerk platziert ist. Bei der Bandeinzugsanordnung kann es sich beispielsweise um zwei parallel verlaufende Unterwalzen handeln, von der zumindest eine mit Hilfe des Doppelwellenmotors angetrieben wird. Auf den beiden Unterwalzen können schließlich mehrere Belastungswalzen aufliegen, die den Faserverband gegen die Unterwalzen zu drücken. Schließlich kann eine Funktionseinrichtung als Abtasteinrichtung für den Faserverband ausgebildet sein, mit deren Hilfe ein oder mehrere physikalische Parameter (z. B. die Dicke oder Breite) des Faserverbands vor dem Streckwerk überwacht werden kann. Hierfür kann die Abtasteinrichtung beispielsweise über zwei parallel verlaufende Abtastwalzen oder Abtastscheiben verfügen, von denen zumindest eine mit dem Doppelwellenmotor in Verbindung steht und zwischen denen der Faserverband hindurchgeführt wird (wobei die Drehachsen der Abtastwalzen bzw. der Abtastscheiben vorzugsweise vertikal verlaufen).

Vorteile bringt es zudem mit sich, wenn der erste Wellenabschnitt oder der zweite Wellenabschnitt mit einer Eingangswalze des Streckwerks und der zweite Wellenabschnitt mit einer oder mehreren der genannten Funktionseinheiten antriebsmäßig in Verbindung steht. Insbesondere im erst genannten Fall kann ein Fehlverzug im Bereich zwischen der bzw. den entsprechenden Funktionseinheiten und der Eingangswalze verhindert werden, da die jeweiligen Drehzahlverhältnisse aufgrund der Kopplung mit dem Doppelwellenmotor während des Betriebs der Spinnereivorbereitungsmaschine konstant bleiben. In diesem Zusammenhang ist es insbesondere von Vorteil, wenn sämtliche das Faserband führenden Funktionseinheiten, die sich in Transportrichtung vor dem Streckwerk befinden, mit Hilfe des Doppelwellenmotors angetrieben werden, der darüber hinaus auch für den Antrieb der Eingangswalze zuständig sein sollte, um einen gleichmäßigen Transport des Faserverbands sicherzustellen.

Besondere Vorteile bringt es mit sich, wenn der erste Wellenabschnitt oder der zweite Wellenabschnitt mit einer mittleren Streckwerkswalze und der zweite Wellenabschnitt mit einer oder mehreren der genannten Funktionseinheiten antriebsmäßig in Verbindung steht. Auch in diesem Fall ist schließlich gewährleistet, dass sich die angetriebenen Elemente der beteiligten Funktionseinheiten und die mittlere Streckwerkswalze mit einem stets konstanten Drehzahlverhältnis drehen (wobei das Verhältnis selbstverständlich durch entsprechend zwischengeschaltete Getriebeanordnungen angepasst werden kann).

Besonders vorteilhaft ist es, wenn der Doppelwellenmotor in Transportrichtung räumlich zwischen dem Streckwerk und einer oder mehreren Funktionseinheiten angeordnet ist. Der Doppelwellenmotor ist also vorzugsweise dem Streckwerk vorgeordnet und befindet sich beispielsweise zwischen der Abtasteinrichtung und der Eingangswalze bzw. in der Flucht zwischen Eingangswalze und Abtasteinrichtung. Insbesondere ist es hierbei denkbar, dass der Doppelwellenmotor unterhalb der Ebene angeordnet ist, die durch die Abtastscheiben bzw. Abtastwalzen der Abtasteinrichtung und der Drehachse der Eingangswalze gebildet wird.

Vorteilhaft ist es, wenn eine Ausgangswalze mit einem zweiten Motor antriebsmäßig in Verbindung steht. Hierdurch erfolgt eine antriebsmäßige Entkopplung der Ausgangswalze von der Eingangswalze und/oder der mittleren Streckwerkswalze. Der zweite Motor befindet sich vorzugsweise (in Transportrichtung gesehen) hinter dem Streckwerk und/oder in der Flucht von Streckwerk und Doppelwellenmotor. Durch die Wahl des Drehzahlverhältnisses zwischen der Drehzahl des Doppelwellenmotors und der Drehzahl des zweiten (Elektro-)Motors kann schließlich der Verzug, insbesondere kontinuierlich, angepasst werden, so dass von der Spinnereivorbereitungsmaschine ein besonders gleichmäßig verzogener Faserverband produziert werden kann.

Des Weiteren ist es vorteilhaft, wenn die Längsachsen des ersten Wellenabschnitts und des zweiten Wellenabschnitts kolinear verlaufen. Es kann sich also bei den Wellenabschnitten um zwei Wellenstummel handeln, die jeweils von außen in das Innere des Doppelwellenmotors ragen. Denkbar ist ebenso, dass es sich bei den Wellenabschnitten um die äußeren Abschnitte einer einzigen Antriebswelle des Doppelwellenmotors handelt. Sind beide Wellenabschnitte jeweils mit einem oder mehreren Bauteilen bzw. Baugruppen der Spinnereivorbereitungsmaschine verbunden, so ergibt sich schließlich durch die kolineare Anordnung der Wellenabschnitte ein gleichmäßiger Krafteintrag in bzw. eine gleichmäßige Kraftentnahme aus dem Motor, so dass eine hohe Laufruhe und eine geringe Belastung der jeweiligen Lagerungen der Wellenabschnitte gewährleistet ist.

Auch ist es von Vorteil, wenn die Längsachsen des ersten Wellenabschnitts und des zweiten Wellenabschnitts horizontal ausgerichtet sind. Dies ist hat den Vorteil, dass die Drehachse(n) der Wellenabschnitte parallel zu einem Großteil der Drehachsen der über den Doppelwellenmotor anzutreibenden Bauteile der Spinnereivorbereitungsmaschine verläuft, so dass keine Drehrichtungsumkehr erforderlich ist (so verlaufen die Drehachsen der Streckwerkswalzen und die Drehachsen der Unterwalzen einer eventuell vorhandenen Bandeinzugsanordnung in der Regel horizontal). Im Ergebnis ist eine ruckelfreie und verschleißarme Kraftübertragung von den Wellenabschnitten auf die jeweiligen Abschnitte der hierüber angetriebenen Bauteile möglich.

Vorteilhaft ist es zudem, wenn die Längsachsen des ersten Wellenabschnitts und des zweiten Wellenabschnitts senkrecht zur Transportrichtung ausgerichtet sind, da eine derartige Ausrichtung auch der Ausrichtung der Drehachsen der Streckwerkswalzen entspricht. Mit anderen Worten erstrecken sich die Längsachsen (= Drehachsen) der Wellenabschnitte vorzugsweise in Breitenrichtung der Spinnereivorbereitungsmaschine, die in der Regel in Längsrichtung eine weitaus größere räumliche Ausdehnung aufweist als in der genannten Breitenrichtung.

Ebenso bringt es Vorteile mit sich, wenn der erste Wellenabschnitt und/oder der zweite Wellenabschnitt ein Kraftübertragungselement, beispielsweise in Form einer Riemenscheibe, aufweist. Die Riemenscheiben sind vorzugsweise im Bereich der nach außen gerichteten Stirnseiten der Wellenabschnitte platziert, wobei an einer oder beiden Wellenabschnitten auch zwei oder mehr Riemenscheiben angeordnet sein können, um die Drehbewegung des Doppelwellenmotors auf mehrere anzutreibende Elemente der Spinnereivorbereitungsmaschine übertragen zu können. Die Übertragung erfolgt vorzugsweise mit Hilfe von entsprechend mit den Kraftübertragungselementen verbundenen Koppelelemente, insbesondere mit Hilfe eines oder mehrerer Riementriebe, wobei es von Vorteil ist, wenn die Koppelelemente ihrerseits wieder mit entsprechenden Kraftübertragungselementen der Eingangswalze des Streckwerks, der mittleren Streckwerkswalze, einer oder mehreren Elementen der Abzugsanordnung, der Bandeinzugsanordnung (insbesondere mit einer oder mehreren ihrer Unterwalzen) und/oder der Abtasteinrichtung (z. B. mit einer oder mehreren Abtastscheiben oder Abtastwalzen) antriebsmäßig verbunden sind.

Auch ist es äußert vorteilhaft, wenn ein oder mehrere der Koppelelemente über Umlenkelemente, beispielsweise in Form von Umlenkrollen, geführt sind. Die Umlenkelemente bewirken schließlich eine Richtungsänderung der jeweiligen Koppelelemente, so dass die Drehrichtung des Doppelwellenmotors um einen beliebigen Winkel umgelenkt werden kann.

Ebenso bringt es Vorteile mit sich, wenn zumindest ein Umlenkelement eine Umlenkung eines oder mehrerer Koppelelemente um 90° bewirkt. Hierdurch ist schließlich trotz horizontal verbautem Doppelwellenmotor ein Antrieb von Elementen mit einer vertikal verlaufenden Drehachse (z. B. der Abtastscheibe(n) oder Abtastwalze(n)) möglich.

Besondere Vorteile bringt es mit sich, wenn der erste Wellenabschnitt eine erste Riemenscheibe aufweist, die mit Hilfe eines ersten Riementriebs mit einer mittleren Streckwerkswalze gekoppelt ist, dass der zweite Wellenabschnitt eine zweite Riemenscheibe aufweist, die mit Hilfe eines zweiten Riementriebs mit einer Eingangswalze des Streckwerks gekoppelt ist, und dass der erste oder der zweite Wellenabschnitt eine dritte Riemenscheibe aufweist, die mit Hilfe eines dritten Riementriebs mit der Abzugsanordnung, der Bandeinzugsanordnung und/oder der Abtasteinrichtung antriebsmäßig verbunden ist. Durch die genannte Anordnung erhält man eine besonders zuverlässige und wartungsarme Antriebskonstellation, die zudem eine hohe Laufruhe aufweist.

Schließlich kann es von Vorteil sein, wenn die Spinnereivorbereitungsmaschine ein oder mehrere Merkmale der im Folgenden beschriebenen Antriebsanordnung bzw. der damit ausgerüsteten Spinnereivorbereitungsmaschine aufweist, wobei bezüglich der jeweiligen Vorteile und Weiterbildungen auf die nachfolgende Beschreibung verwiesen wird.

Unabhängig von den bisherigen Ausführungen wird im Folgenden eine weitere Antriebsanordnung einer Spinnereivorbereitungsmaschine, beispielsweise einer Strecke, beschrieben, die ebenfalls eine Lösung der oben genannten Aufgabe darstellt. Erfindungsgemäß umfasst die Antriebsanordnung einen ersten Antrieb zum Antrieb wenigstens einer der Streckwerkswalzen der Spinnereivorbereitungsmaschine sowie einen zweiten Antrieb zum Antrieb zumindest einer der restlichen Streckwerkswalzen. Mit anderen Worten sind wenigstens zwei Antriebe (z. B. Elektromotoren) vorhanden, die sich den Antrieb der einzelnen Streckwerkswalzen teilen. Zudem ist vorgesehen, dass der zweite Antrieb dem Streckwerk in der genannten Transportrichtung räumlich nachgeordnet ist. Der zweite Antrieb ist somit an einer Stelle der Spinnereivorbereitungsmaschine platziert, in der generell weniger Bauteile vorhanden sind als im Eingangsbereich der Spinnereivorbereitungsmaschine (d. h. dem Bereich, der dem Streckwerk vorgeordnet ist). Zudem kann der zweite Antrieb in dem Fall, dass er ausschließlich für eine oder zwei Streckwerkswalzen zuständig ist, relativ klein dimensioniert sein, da der Antrieb der restlichen Streckwerkswalze(n) sowie eventuell weiterer Funktionseinheiten (zur Definition siehe oben) vorzugsweise von dem ersten Antrieb übernommen wird.

Auch ist es von Vorteil, wenn der erste Antrieb mit einer Eingangswalze oder einer mittleren Streckwerkswalze des Streckwerks antriebsmäßig verbunden ist. Während also der zweite Antrieb vorzugsweise die Ausgangswalze und damit die ihm am nächsten liegende Streckwerkswalze antreibt, erfolgt der Antrieb der restlichen Streckwerkswalzen bevorzugt von dem ersten Antrieb. Neben der vorteilhaften räumlichen Platzierung der beiden Antriebe ermöglicht der separate Antrieb der Ausgangswalze zudem eine besonders einfache, schnelle und zuverlässige Anpassung der Drehzahl der Ausgangswalze über die Drehzahlanpassung des zweiten Antriebs. Hierdurch wird nicht zuletzt eine vorteilhafte Steuerung bzw. Regelung des Verzugs des Faserverbands erreicht, der durch unterschiedliche Drehzahlen entsprechender Streckwerkswalzen bewirkt wird.

Ebenso ist es von Vorteil, wenn der zweite Antrieb mit einer Ausgangswalze des Streckwerks und/oder wenigstens einer dem Streckwerk in der genannten Transportrichtung nachgeordneten Kalanderwalze antriebsmäßig verbunden ist, wobei die Kalanderwalze in der Regel mit einer weiteren Kalanderwalze zusammenwirkt und der Führung des Faserverbands zwischen dem Streckwerk und einem den Kalanderwalzen in Transportrichtung nachgeordneten Ablageanordnung, beispielsweise einem im Betrieb des Streckwerks rotierenden Ablageteller, platziert sind. Insbesondere, wenn sowohl die Ausgangswalze als auch wenigstens eine der Kalanderwalzen mit dem zweiten Antrieb antriebsmäßig (beispielsweise über einen oder mehrere Riemen) in Wirkverbindung steht, ist auf konstruktiv einfache Weise sichergestellt, dass das Verhältnis der Umfangsgeschwindigkeiten von Kalanderwalzen und Ausgangswalze konstant ist.

Besonders vorteilhaft ist es, wenn der erste Antrieb dem Streckwerk in der genannten Transportrichtung räumlich vorgeordnet ist. Dies ist insbesondere dann zweckmäßig, wenn der erste Antrieb, der beispielsweise als Doppelwellenmotor mit einer oder mehreren der oben genannten Eigenschaften ausgebildet sein kann, dem Antrieb der Eingangswalze und/oder der mittleren Streckwerkswalze und einer oder mehrerer der genannten Funktionseinheiten dient, die ebenfalls dem Streckwerk vorgelagert sind. Vorteilhafterweise wird der erste Antrieb daher zwischen dem Streckwerk und einer der Funktionseinheiten platziert.

Vorteilhaft ist es zudem, wenn die Spinnereivorbereitungsmaschine eine dem Streckwerk in Transportrichtung räumlich nachgeordnete Ablagevorrichtung, beispielsweise in Form eines Ablagetellers, zur Ablage des verstreckten Faserverbands besitzt, wobei der zweite Antrieb der Ablagevorrichtung in Transportrichtung räumlich nachgeordnet ist. Der zweite Antrieb befindet sich in diesem Fall vorzugsweise in der Flucht von erstem Antrieb und Ablagevorrichtung. Da der Faserverband die Spinnereivorbereitungsmaschine in der Regel über die Ablagevorrichtung verlässt, befindet sich der zweite Antrieb vorzugsweise in einem Bereich der Spinnereivorbereitungsmaschine, der nicht von dem Faserverband passiert wird.

Vorteile bringt es zudem mit sich, wenn die Ablagevorrichtung antriebsmäßig mit einem dritten Antrieb verbunden ist. Der Antrieb der Ablagevorrichtung, insbesondere deren Ablageteller, erfolgt in diesem Fall unabhängig vom Antrieb der Streckwerkswalzen oder der oben genannten Funktionseinheiten. Neben dem Ablageteller kann die Ablagevorrichtung ferner einen unterhalb des Ablagetellers angeordneten Drehteller aufweisen, der ebenfalls mit dem dritten Antrieb antriebsmäßig verbunden sein kann. Der Drehteller dient der Aufnahme und Drehung einer zu befüllenden Spinnkanne und weist, ebenso wie der Ablageteller, gewöhnlich eine Drehzahl auf, die signifikant unterhalb der Drehzahl der Streckwerkswalzen liegt.

Auch ist es von Vorteil, wenn der dritte Antrieb dem Streckwerk, insbesondere auch der Ablagevorrichtung, in der genannten Transportrichtung räumlich nachgeordnet ist. Der dritte Antrieb kann sich beispielsweise in Transportrichtung gesehen auf etwa der gleichen Höhe befinden wie der zweite Antrieb, wobei die Antriebswellen des zweiten und/oder dritten Antriebs darüber hinaus unterhalb der Drehachsen der Streckwerkswalzen angeordnet sein können.

Des Weiteren ist es vorteilhaft, wenn die Längsachse einer Antriebswelle des dritten Antriebs vertikal ausgerichtet ist. Dies ist insbesondere in dem Fall von Vorteil, in dem die Antriebswelle mit einer entsprechenden Welle oder Scheibe des Drehtellers und/oder des Ablagetellers mit Hilfe von Riementrieben (Keilriemen, Ketten, etc.) in Verbindung steht. Sollte die genannte Längsachse hingegen in einer nicht-vertikalen Richtung ausgerichtet sein, so wären Umlenkelemente nötig, um die Drehbewegung der Antriebswelle des dritten Antriebs in eine Drehbewegung um eine vertikale Achse umzuwandeln (schließlich sind die Drehachsen des Ablagetellers und/oder des Drehtellers in der Regel vertikal auszurichten).

Auch ist es von Vorteil, wenn die Längsachse einer Antriebswelle des ersten Antriebs und/oder die Längsachse einer Antriebswelle des zweiten Antriebs horizontal ausgerichtet sind. Auf diese Weise verlaufen die Antriebsachsen parallel zu den Drehachsen der Streckwerkswalzen. Auf entsprechende Umlenkelemente mit einer von der Horizontalen abweichenden Drehachse kann in diesem Fall verzichtet werden.

Insbesondere ist es also vorteilhaft, wenn die Längsachsen der Antriebswellen des ersten Antriebs und des zweiten Antriebs parallel zueinander und/oder um 90° verdreht zur Drehachse der Antriebswelle des dritten Antriebs verlaufen.

Schließlich es äußert vorteilhaft, wenn die Spinnereivorbereitungsmaschine bzw. die genannte Antriebsanordnung ein oder mehrere Merkmale der im Zusammenhang mit der ersten Antriebsanordnung bzw. der damit ausgerüsteten Spinnereivorbereitungsmaschine aufweist. Hinsichtlich der jeweiligen Merkmale bzw. Vorteile wird auf die nachfolgende Beschreibung bzw. den auf den ersten Erfindungsaspekt gerichteten Beschreibungsabschnitt verwiesen.

Weitere Vorteile der Erfindung sind in den nachfolgenden Ausführungsbeispielen beschrieben. Es zeigen:
- **Figur 1**: eine Seitenansicht einer erfindungsgemäßen Spinnereivorbereitungsmaschine,
- **Figur 2**: eine Draufsicht des in Transportrichtung des Faserverbands vor dem Streckwerk einer erfindungsgemäßen Spinnereivorbereitungsmaschine liegenden Eingangsbereichs,
- **Figur 3**: den in Figur 2 gezeigten Bereich in einer Seitenansicht gemäß der Blickebene A-A' in Figur 2,
- **Figur 4**: eine Prinzipskizze einer erfindungsgemäßen Antriebsanordnung einer Spinnereivorbereitungsmaschine, und
- **Figur 5**: eine Prinzipskizze einer weiteren erfindungsgemäßen Antriebsanordnung einer Spinnereivorbereitungsmaschine.

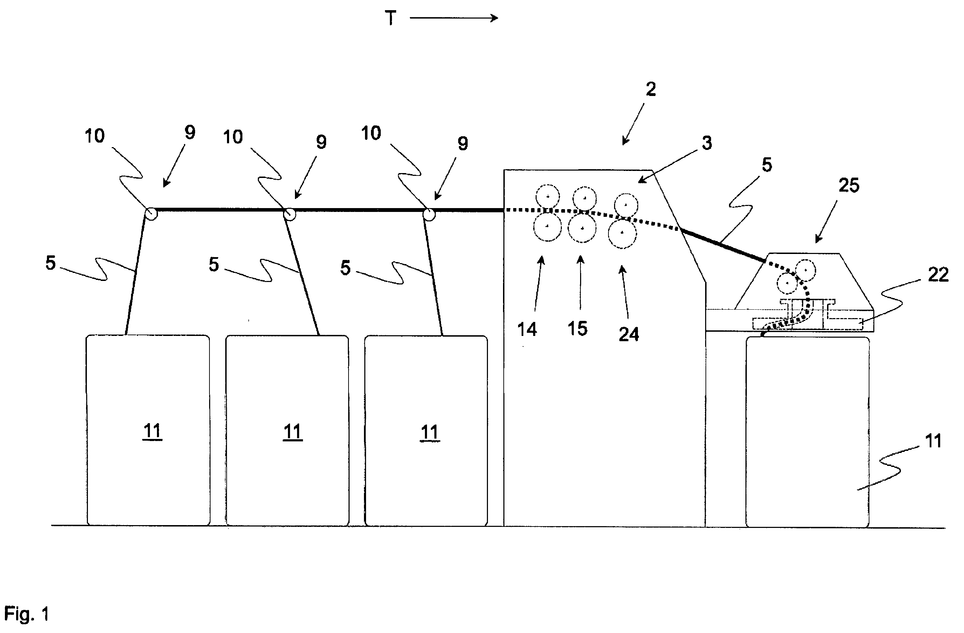

Figur 1 zeigt in einer Seitenansicht schematisch und als Beispiel für eine erfindungsgemäße Spinnereivorbereitungsmaschine 2 eine Strecke zum Verstrecken (Vergleichmäßigen) eines strangförmigen Faserverbands 5. Während des Betriebs der Strecke wird der Faserverband 5 (z. B. in Form von Faserbändern) aus mehreren so genannten Spinnkannen 11 mit Hilfe einer Abzugsanordnung 10 entnommen und dem jeweiligen Streckwerk 3 der Strecke (bzw. im Fall einer Mehrkopfstrecke: den Streckwerken 3 der Strecke) zugeführt.

Das Streckwerk 3 besteht in der Regel aus drei oder mehr Walzenpaaren (im gezeigten Beispiel: zwei Eingangswalzen 14, zwei mittlere Streckwerkswalzen 15 und zwei Ausgangswalzen 24), die jeweils eine Unterwalze und eine Oberwalze umfassen und durch unterschiedliche Drehzahlen einen Verzug und somit eine Vergleichmäßigung des Fasermaterials bewirken.

Im Anschluss an das Streckwerk 3 wird das verstreckte Fasermaterial schließlich, vorzugsweise mit Hilfe eines Kalanderwalzenpaares 25, einem rotierenden Ablageteller 22 zugeführt und durch diesen schlingenförmig in eine bereitgestellte Spinnkanne 11 abgelegt.

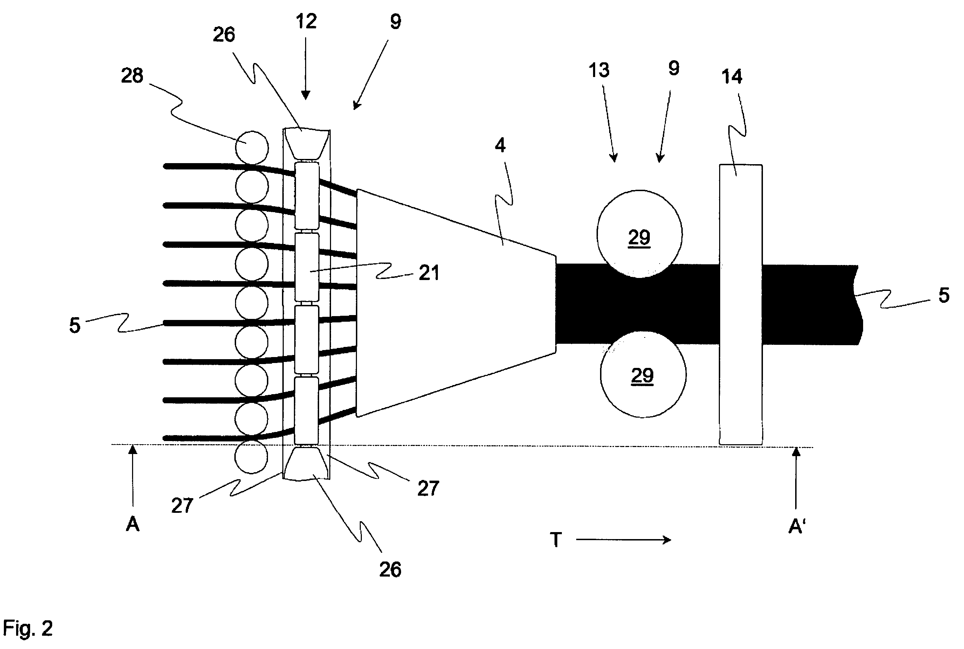

Weitere Einzelheiten des Eingangsbereichs der Strecke (Bereich zwischen der Abzugsanordnung 10 und dem Streckwerk 3) zeigen die Figuren 2 (Draufsicht) und 3 (Seitenansicht entsprechend der Blickebene A-A' in Figur 2), wobei selbstverständlich nicht zwangsläufig alle der im Folgenden beschriebenen Bauteile vorhanden sein müssen.

Zunächst passiert der aus den Spinnkannen 11 abgezogene Faserverband 5, der im gezeigten Beispiel aus acht Faserbändern besteht, in einer Transportrichtung T eine Rechenanordnung 28, welche die Faserbänder auf gegenseitigem Abstand hält.

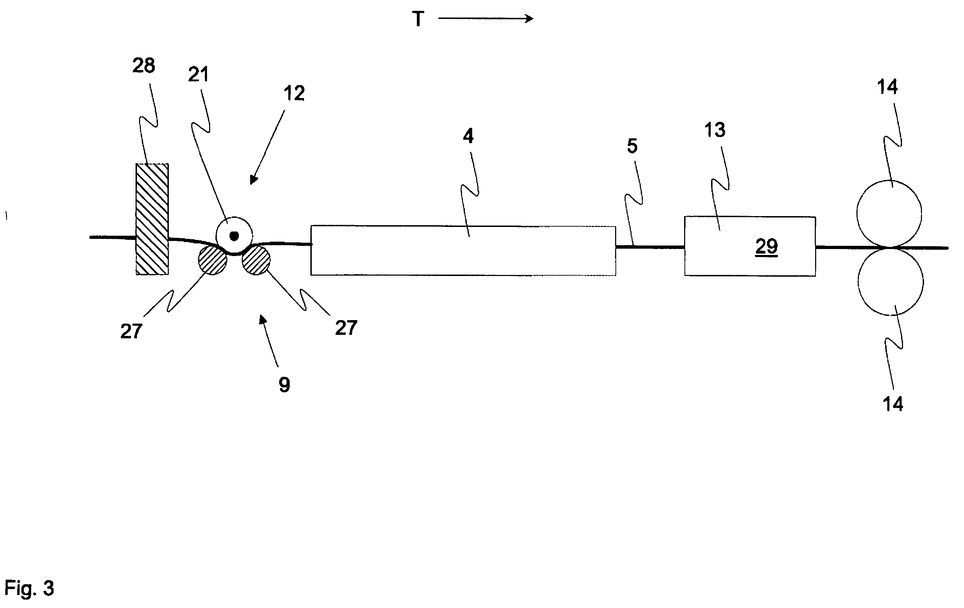

Im Anschluss daran folgt in der Regel eine Bandeinzugsanordnung 12, die zwei parallel verlaufende Unterwalzen 27 sowie mehrere auf den Unterwalzen 27 aufliegend und somit den Faserverband 5 klemmend führende Belastungswalzen 21 (andere Bezeichnung: Jockeywalzen) umfasst, die seitlich mit Hilfe einer Seitenführung 26 geführt sein können. Um neben der Führung (die sicherstellt, dass der Faserverband 5 unter einer gewissen Spannung steht) einen Transport des Faserverbands 5 in Richtung des Streckwerks 3 der Strecke zu gewährleisten (das Streckwerk 3 befindet sich rechts von dem in den Figuren 2 und 3 gezeigten Bereich), ist in der Regel vorgesehen, dass eine (oder bei Bedarf auch beide) Unterwalzen 27 der Bandeinzugsanordnung 12 über einen noch näher zu beschreibenden Antrieb angetrieben werden.

Nach Passieren der Bandeinzugsanordnung 12 gelangen die Faserbänder des Faserverbands 5 schließlich in den Bereich eines Trichters 4, der die Faserbänder zusammenführt. Im Anschluss an den Trichter 4 kann wiederum eine Abtasteinrichtung 13 angeordnet sein, die vorzugsweise über einen Sensor zur Messung definierter physikalischer Parameter (Dichte, Dicke, spezifisches Gewicht, etc.) des Faserverbands 5 verfügt, um auf Basis der Parameter den anschließenden Verzug des Faserverbands 5 mit Hilfe des Streckwerks 3 regulieren zu können. Die Abtasteinrichtung 13 verfügt beispielsweise über zwei Abtastscheiben 29 mit vertikal angeordneten Drehachsen, wobei eine oder beide Abtastscheiben 29 wiederum mit einem Antrieb in Verbindung stehen kann, um zusätzlich einen Transport des Faserverbands 5 bewirken zu können. Schließlich folgt in den meisten Fällen das zwei Eingangswalzen 14 umfassende Eingangswalzenpaar des Streckwerks 3, welches ein gleichmäßiges Zuführen des Faserverbands 5 in das Streckwerk 3 der Strecke gewährleistet.

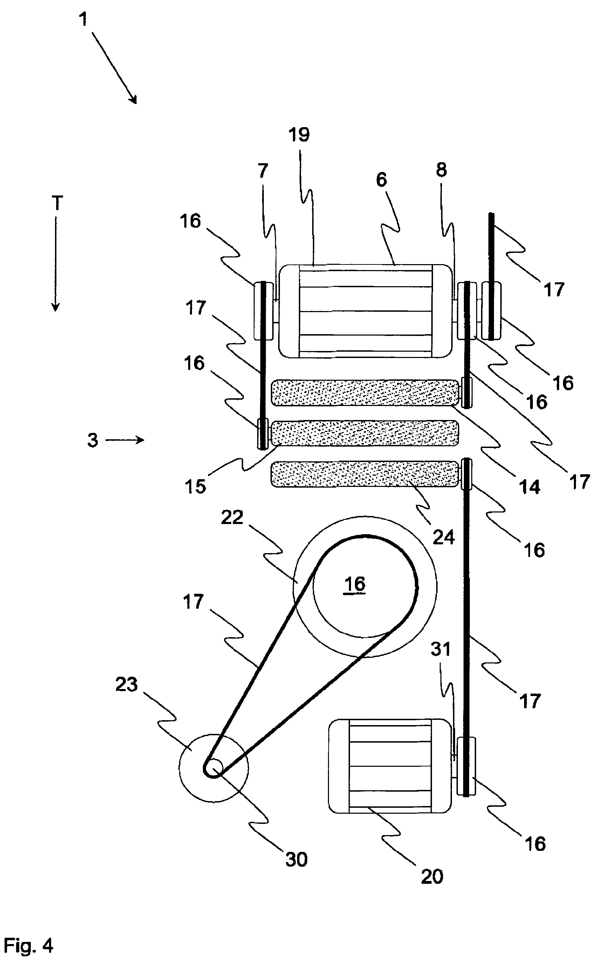

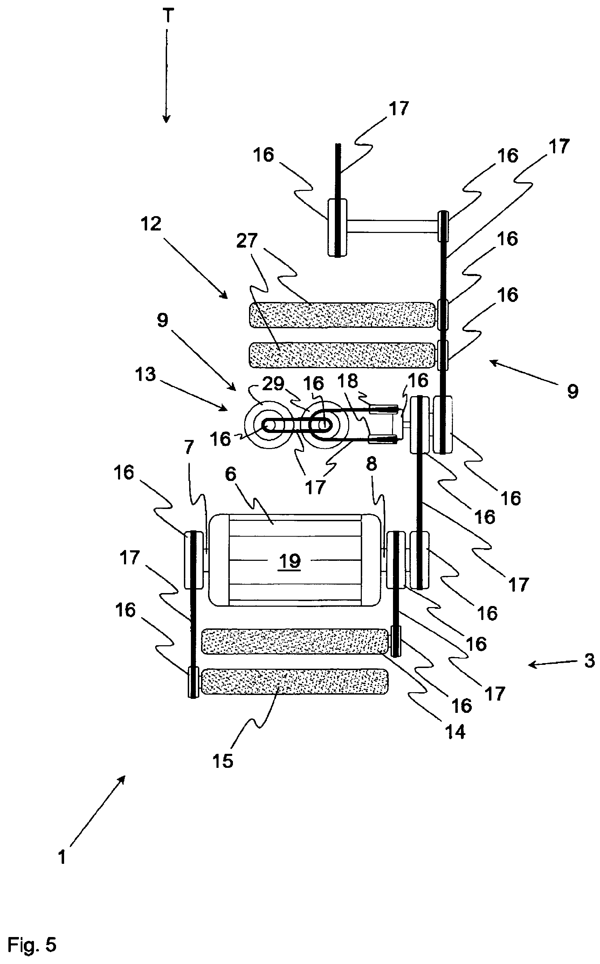

Wie sich aus den bisherigen Ausführungen ergibt, besitzt eine Spinnereivorbereitungsmaschine 2, beispielsweise eine Strecke, eine Vielzahl von Bauteilen, die mit Hilfe eines oder mehrerer Antriebe angetrieben werden müssen, um den Betrieb der Spinnereivorbereitungsmaschine 2 zu gewährleisten. Hierzu gehören beispielsweise zumindest ein Teil der Streckwerkswalzen 14, 15, 24 , dem Streckwerk 3 in der genannten Transportrichtung T vorgeordnete Funktionseinheiten 9, wie z. B. die Abzugsanordnung 10, die Bandeinzugsanordnung 12 oder die Abtasteinrichtung 13, oder der erwähnte Ablageteller 22. Generell hat es sich in diesem Zusammenhang bewährt, die einzelnen Bauteile mit einem zentralen Antriebsmotor anzutreiben, wobei die jeweiligen Drehzahlverhältnisse mit Hilfe entsprechender Getriebeanordnungen eingestellt wurden. Da mit diesem Antriebskonzept eine Vielzahl von Nachteilen verbunden sind (beispielsweise eine nur aufwändige Drehzahlanpassung einzelner Bauteile), wurde das Antriebskonzept gemäß vorliegender Erfindung wie im Folgenden beschrieben modifiziert, wobei in diesem Zusammenhang insbesondere auf die Figuren 4 und 5 verwiesen wird.

Wie den genannten Figuren zunächst zu entnehmen ist, kann die Antriebsanordnung 1 der Spinnereivorbereitungsmaschine 2 gemäß einem ersten Aspekt der Erfindung einen Doppelwellenmotor 6 aufweisen, der dem Antrieb wenigstens einer der Streckwerkswalzen 14, 15, 24 und wenigstens einer der dem Streckwerk 3 in Transportrichtung T des Faserverbands 5 vorgelagerten Funktionseinheiten 9 dient. Der Doppelwellenmotor 6 weist hierfür eine ersten Wellenabschnitt 7 und einen vorzugsweise kolinear mit dem ersten Wellenabschnitt 7 verlaufenden zweiten Wellenabschnitt 8 auf. Bei den genannten Wellenabschnitten 7, 8 handelt es sich vorzugsweise um die nach außen weisenden Achsstummel einer einzigen Antriebswelle, die den eigentlichen Motorblock durchzieht. Alternativ können selbstverständlich auch zwei separate Achsen vorliegen, die jeweils einen Wellenabschnitt 7, 8 bilden und jeweils von außen in den Motorblock ragen, in dem sich wiederum der Stator des vorzugsweise als Elektromotor ausgebildeten Doppelwellenmotors 6 befindet.

Der Doppelwellenmotor 6 kann darüber hinaus an seinen beiden Wellenabschnitten 7, 8 jeweils ein Kraftübertragungselement, beispielsweise in Form einer Riemenscheibe 16, aufweisen, die wiederum mit entsprechenden Koppelelementen, z. B. in Form der gezeigten Riementriebe 17 (Zahnriemen, Kette, oder dergleichen) mit den jeweils anzutreibenden Elementen der Spinnereivorbereitungsmaschine 2 antriebsmäßig in Verbindung steht. In den gezeigten Ausführungsbeispielen gemäß den Figuren 4 und 5 ist der Doppelwellenmotor 6 über seinen ersten Wellenabschnitt 7 mit der mittleren Streckwerkswalze 15 und mit seinem zweiten Wellenabschnitt 8 mit der Eingangswalze 14 und gleichzeitig mit der bereits genannten Abtasteinrichtung 13 verbunden. Ebenso ist eine Verbindung des zweiten Wellenabschnitts 8 mit der Bandeinzugsanordnung 12 und/oder der Abzugsanordnung 10 denkbar (die zuletzt genannte Funktionseinheit 9 würde in diesem Fall beispielsweise mit dem in Figur 5 nach oben weisenden Riementrieb 17, der nur teilweise dargestellt ist, verbunden, so dass der Doppelwellenmotor 6 einerseits für den Antrieb der Eingangswalze 14 und der mittleren Streckwerkwalze 15 und andererseits für den Antrieb von einer oder mehreren in Transportrichtung T vorgelagerten Funktionseinheiten 9 zuständig sein kann).

Da die angetriebenen Bauteile der einzelnen Funktionseinheiten 9 teilweise eine vertikale Drehachse aufweisen (wie beispielsweise die Abtastscheiben 29 der Abtasteinrichtung 13), kann es ferner zweckmäßig sein, die genannten Koppelelemente über Umlenkelemente 18 (z. B. in Form von Umlenkscheiben) zu führen. Diese ermöglichen schließlich einen Antrieb von Bauteilen mit vertikal verlaufender Drehachse mit Hilfe des Doppelwellenmotors 6, dessen Drehachse vorzugsweise horizontal verläuft.

Ein weiterer unabhängiger Aspekt der Erfindung sieht schließlich vor, dass die Antriebsanordnung 1 einen, beispielsweise als Doppelwellenmotor 6 ausgebildeten, ersten Antrieb 19 zum Antrieb wenigstens einer der Streckwerkswalzen 14, 15, 24 sowie zumindest einen zweiten Antrieb 20 zum Antrieb wenigstens einer der restlichen Streckwerkswalzen14, 15, 24, insbesondere einer der Ausgangswalzen 24, oder der genannten Kalanderwalzen 25 umfasst.

Durch die Anordnung zweier separater Antriebe ist einerseits eine sehr genaue Regulierung des Streckwerks 3 möglich, da die Drehzahlen der jeweiligen Streckwerkswalzen individuell geregelt werden können. Zudem können kleinere Motoren verbaut werden, da nicht der gesamte Antrieb aller Streckwerkswalzen 14, 15, 24 von einem Zentralantrieb übernommen werden muss. Die Antriebswellen 7, 8, 31 der beiden Motoren verlaufen vorzugsweise horizontal und parallel zueinander bzw. parallel zu den jeweiligen Drehachsen der Streckwerkswalzen 14, 15, 24. Ferner ist es von Vorteil, den zweiten Antrieb 20 in Transportrichtung T nach dem Streckwerk 3 zu platzieren, während der erste Antrieb 19 vorzugsweise vor dem Streckwerk 3 angeordnet ist. Hierdurch werden nicht zuletzt kurze Übertragungswege zwischen den Antrieben und den anzutreibenden Elementen geschaffen.

Darüber hinaus kann es insbesondere von Vorteil sein, einen dritten Antrieb 23 vorzusehen, der einen eventuell vorhandenen Ablageteller 22 und/oder einen darunter platzierten Drehteller für eine unter dem Ablageteller 22 abzustellende Spinnkanne 11 antreibt. Ein derartiger Antrieb ist in Figur 4 gezeigt. Der dritte Antrieb 23 weist vorzugsweise eine vertikal ausgerichtete Antriebswelle 30 auf, da auch der Ablageteller 22 bzw. der genannte Drehteller eine vertikale Drehachse besitzt.

Insbesondere kann es schließlich vorteilhaft sein, den zweiten und/oder dritten Antrieb 20, 23 in Transportrichtung T des Faserverbands 5 nach dem Ablageteller 22 zu platzieren.

### Bezugszeichenliste

- 1: Antriebsanordnung
- 2: Spinnereivorbereitungsmaschine
- 3: Streckwerk
- 4: Trichter
- 5: Faserverband
- 6: Doppelwellenmotor
- 7: erster Wellenabschnitt
- 8: zweiter Wellenabschnitt
- 9: Funktionseinheit
- 10: Abzugsanordnung
- 11: Spinnkanne
- 12: Bandeinzugsanordnung
- 13: Abtasteinrichtung
- 14: Eingangswalze
- 15: mittlere Streckwerkswalze
- 16: Riemenscheibe
- 17: Riementriebe
- 18: Umlenkelement
- 19: erster Antrieb
- 20: zweiter Antrieb
- 21: Belastungswalze
- 22: Ablageteller
- 23: dritter Antrieb
- 24: Ausgangswalze
- 25: Kalanderwalzenpaar
- 26: Seitenführung
- 27: Unterwalze
- 28: Rechenanordnung
- 29: Abtastscheibe
- 30: Antriebswelle des dritten Antriebs
- 31: Antriebswelle des zweiten Antriebs

- T: Transportrichtung

## Patentansprüche

1. Antriebsanordnung einer Spinnereivorbereitungsmaschine (2), beispielsweise einer Strecke, wobei die Spinnereivorbereitungsmaschine (2) ein Streckwerk (3) mit mehreren Streckwerkswalzen (14, 15, 24) zum Verstrecken eines die Spinnereivorbereitungsmaschine (2) in einer Transportrichtung (T) passierenden Faserverbands (5) aufweist, wobei die Antriebsanordnung (1) einen Antrieb in Form eines Doppelwellenmotors (6) umfasst, wobei der Doppelwellenmotor (6) einen ersten Wellenabschnitt (7) und einen zweiten Wellenabschnitt (8) umfasst, wobei die Spinnereivorbereitungsmaschine (2) eine oder mehrere dem Streckwerk (3) in der genannten Transportrichtung (T) räumlich vorgelagerte Funktionseinheiten (9) umfasst, die während des Betriebs der Spinnereivorbereitungsmaschine (2) zumindest teilweise dem Transport und/oder der Führung des Faserverbands (5) dienen, **dadurch gekennzeichnet, dass** der erste Wellenabschnitt (7) mit zumindest einer der Streckwerkswalzen (14, 15, 24) und der zweite Wellenabschnitt (8) mit wenigstens einer der Funktionseinheiten (9) antriebsmäßig in Verbindung steht.

2. Antriebsanordnung gemäß vorangegangenem Anspruch, **dadurch gekennzeichnet, dass** die Spinnereivorbereitungsmaschine (2) eine oder mehrere Funktionseinheiten (9) in Form einer Abzugsanordnung (10) zum Abzug des Faserverbands (5) aus einer oder mehreren Spinnkannen (11) und/oder in Form einer Bandeinzugsanordnung (12) zur Führung des Faserverbands (5) während seines Transports in Richtung des Streckwerks (3) und/oder in Form einer Abtasteinrichtung (13) für den Faserverband (5) umfasst.

3. Antriebsanordnung gemäß einem der vorangegangenen Ansprüche, **dadurch gekennzeichnet, dass** der erste Wellenabschnitt (7) oder der zweite Wellenabschnitt (8) mit einer Eingangswalze (14) des Streckwerks (3) und der zweite Wellenabschnitt (8) mit einer oder mehreren der genannten Funktionseinheiten (9) antriebsmäßig in Verbindung steht.

4. Antriebsanordnung gemäß einem der vorangegangenen Ansprüche, **dadurch gekennzeichnet, dass** der erste Wellenabschnitt (7) oder der zweite Wellenabschnitt (8) mit einer mittleren Streckwerkswalze (15) und der zweite Wellenabschnitt (8) mit einer oder mehreren der genannten Funktionseinheiten (9) antriebsmäßig in Verbindung steht.

5. Antriebsanordnung gemäß einem der vorangegangenen Ansprüche, **dadurch gekennzeichnet, dass** der Doppelwellenmotor (6) in Transportrichtung (T) räumlich zwischen dem Streckwerk (3) und einer oder mehreren Funktionseinheiten (9) angeordnet ist.

6. Antriebsanordnung gemäß einem der vorangegangenen Ansprüche, **dadurch gekennzeichnet, dass** eine Ausgangswalze (24) des Streckwerks (3) mit einem zweiten Motor antriebsmäßig in Verbindung steht.

7. Antriebsanordnung gemäß einem der vorangegangenen Ansprüche, **dadurch gekennzeichnet, dass** die Längsachsen des ersten Wellenabschnitts (7) und des zweiten Wellenabschnitts (8) kolinear verlaufen und/oder dass die Längsachsen des ersten Wellenabschnitts (7) und des zweiten Wellenabschnitts (8) horizontal ausgerichtet sind und/oder dass die Längsachsen des ersten Wellenabschnitts (7) und des zweiten Wellenabschnitts (8) senkrecht zur Transportrichtung (T) ausgerichtet sind.

8. Antriebsanordnung gemäß einem der vorangegangenen Ansprüche, **dadurch gekennzeichnet, dass** der erste Wellenabschnitt (7) und/oder der zweite Wellenabschnitt (8) ein Kraftübertragungselement, beispielsweise in Form einer Riemenscheibe (16), aufweist, wobei das Kraftübertragungselementmit mit Hilfe eines oder mehrerer Koppelelemente, insbesondere mit Hilfe eines oder mehrerer Riementriebe (17), mit einer Eingangswalze (14) des Streckwerks (3), einer mittleren Streckwerkswalze (15), der Abzugsanordnung (10), der Bandeinzugsanordnung (12) und/oder der Abtasteinrichtung (13) antriebsmäßig verbunden sind, wobei ein oder mehrere der Koppelelemente vorzugsweise über Umlenkelemente (18), beispielsweise in Form von Umlenkrollen, geführt sind, und wobei zumindest ein Umlenkelement (18) vorzugsweise eine Umlenkung eines oder mehrerer Koppelelemente um 90° bewirkt.

9. Antriebsanordnung gemäß einem der vorangegangenen Ansprüche, **dadurch gekennzeichnet, dass** der erste Wellenabschnitt (7) eine erste Riemenscheibe (16) aufweist, die mit Hilfe eines ersten Riementriebs (17) mit einer mittleren Streckwerkswalze (15) gekoppelt ist, dass der zweite Wellenabschnitt (8) eine zweite Riemenscheibe (16) aufweist, die mit Hilfe eines zweiten Riementriebs (17) mit einer Eingangswalze (14) des Streckwerks (3) gekoppelt ist, und dass der erste Wellenabschnitt (7) oder der zweite Wellenabschnitt (8) eine dritte Riemenscheibe (16) aufweist, die mit Hilfe eines dritten Riementriebs (17) mit der Abzugsanordnung (10), der Bandeinzugsanordnung (12) und/oder der Abtasteinrichtung (13) antriebsmäßig verbunden ist.

10. Antriebsanordnung gemäß einem der vorangegangenen Ansprüche, **dadurch gekennzeichnet, dass** die Spinnereivorbereitungsmaschine (2) ein oder mehrere Merkmale der Spinnereivorbereitungsmaschine (2) gemäß einem der nachfolgenden Ansprüche aufweist.

11. Antriebsanordnung einer Spinnereivorbereitungsmaschine (2), beispielsweise einer Strecke, wobei die Spinnereivorbereitungsmaschine (2) ein Streckwerk (3) mit mehreren Streckwerkswalzen (14, 15, 24) zum Verstrecken eines die Spinnereivorbereitungsmaschine (2) in einer Transportrichtung (T) passierenden Faserverbands (5) aufweist, und wobei die Antriebsanordnung (1) einen ersten Antrieb (19) zum Antrieb wenigstens einer der Streckwerkswalzen (14, 15, 24) umfasst, **dadurch gekennzeichnet, dass** die Antriebsanordnung (1) zumindest einen zweiten Antrieb (20) zum Antrieb zumindest einer der restlichen Streckwerkswalzen (14, 15, 24) umfasst, wobei der zweite Antrieb (20) dem Streckwerk (3) in der genannten Transportrichtung (T) räumlich nachgeordnet ist.

12. Antriebsanordnung gemäß Anspruch 11, **dadurch gekennzeichnet, dass** der erste Antrieb (19) mit einer Eingangswalze (14) oder einer mittleren Streckwerkswalze (15) des Streckwerks (3) antriebsmäßig verbunden ist und/oder dass der zweite Antrieb (20) mit einer Ausgangswalze (24) des Streckwerks (3) und/oder wenigstens einer dem Streckwerk in der genannten Transportrichtung (T) nachgeordneten Kalanderwalze (25) antriebsmäßig verbunden ist.

13. Antriebsanordnung gemäß Anspruch 11 oder 12, **dadurch gekennzeichnet, dass** der erste Antrieb (19) dem Streckwerk (3) in der genannten Transportrichtung (T) räumlich vorgeordnet ist.

14. Antriebsanordnung gemäß einem der Ansprüche 11 bis 13, **dadurch gekennzeichnet, dass** die Spinnereivorbereitungsmaschine (2) eine dem Streckwerk (3) in Transportrichtung (T) räumlich nachgeordnete Ablagevorrichtung, beispielsweise in Form eines Ablagetellers (22), zur Ablage des verstreckten Faserverbands (5) besitzt, wobei der zweite Antrieb (20) der Ablagevorrichtung in Transportrichtung (T) räumlich nachgeordnet ist, wobei die Ablagevorrichtung vorzugsweise antriebsmäßig mit einem dritten Antrieb (23) verbunden ist, wobei der dritte Antrieb (23) vorzugsweise dem Streckwerk (3), insbesondere auch der Ablagevorrichtung, in der genannten Transportrichtung (T) räumlich nachgeordnet ist, und wobei die Längsachse einer Antriebswelle (30) des dritten Antriebs (23) vorzugsweise vertikal ausgerichtet ist.

15. Antriebsanordnung gemäß einem der Ansprüche 11 bis 14, **dadurch gekennzeichnet, dass** die Längsachse wenigstens einer Antriebswelle (7, 8) des ersten Antriebs (19) und/oder die Längsachse einer Antriebswelle (31) des zweiten Antriebs (20) horizontal ausgerichtet ist und/oder dass die Längsachsen der Antriebswellen (7, 8; 31) des ersten Antriebs (19) und des zweiten Antriebs (20) parallel zueinander verlaufen.

## Claims

1. A drive arrangement for a spinning preparation machine (2), such as a draw frame, the spinning preparation machine (2) comprising a drafting system (3) having a plurality of drafting system rollers (14, 15, 24) for drafting a fiber strand (5) passing through the spinning preparation machine (2) in a transport direction (T), the drive arrangement (1) comprising a drive in the form of a double shaft motor (6), the double shaft motor (6) comprising a first shaft segment (7) and a second shaft segment (8), the spinning preparation machine (2) comprising one or more functional units (9) disposed upstream of the drafting system (3) in said transport direction (8) and serving at least partially for transporting and/or guiding the fiber strand (5) during operation of the spinning preparation machine (2), **characterized in that** the first shaft segment (7) is connected for drive purposes to at least one of the drafting system rollers (14, 15, 24) and the second shaft segment (8) is connected for drive purposes to at least one of the functional units (9).

2. The drive arrangement according to the preceding claim, **characterized in that** the spinning preparation machine (2) comprises one or more functional units (9) in the form of a take-off arrangement (10) for drawing off the fiber strand (5) from one or more spinning cans (11) and/or in the form of a sliver intake arrangement (12) for guiding the fiber strand (5) during its transport in the direction of the drafting system (3) and/or in the form of a probe device (13) for the fiber strand (5).

3. The drive arrangement according to any one of the preceding claims, **characterized in that** the first shaft segment (7) or the second shaft segment (8) is connected for drive purposes to an intake roller (14) of the drafting system (3) and the second shaft segment (8) is connected for drive purposes to one or more of said functional units (9).

4. The drive arrangement according to any one of the preceding claims, **characterized in that** the first shaft segment (7) or the second shaft segment (8) is connected for drive purposes to a middle drafting system roller (15) and the second shaft segment (8) is connected for drive purposes to one or more of said functional units (9).

5. The drive arrangement according to any one of the preceding claims, **characterized in that** the double shaft motor (6) is disposed in the transport direction (T) between the drafting system (3) and one or more functional units (9).

6. The drive arrangement according to any one of the preceding claims, **characterized in that** an output roller (24) of the drafting system (3) is connected for drive purposes to a second motor.

7. The drive arrangement according to any one of the preceding claims, **characterized in that** the longitudinal axes of the first shaft segment (7) and of the second shaft segment (8) are collinear and/or that the longitudinal axes of the first shaft segment (7) and of the second shaft segment (8) run horizontally and/or that the longitudinal axes of the first shaft segment (7) and of the second shaft segment (8) are oriented perpendicularly to the transport direction (T).

8. The drive arrangement according to any one of the preceding claims, **characterized in that** the first shaft segment (7) and/or the second shaft segment (8) comprises a force transfer element such as in the form of a belt pulley (16), wherein the force transfer element is connected for drive purposes by means of one or more coupling elements, particularly by means of one or more belt drives (17), to an intake roller (14) of the drafting system (3), to a middle drafting system roller (15), to the take-off arrangement (10), to the sliver intake arrangement (12) and/or to the probe device (13), wherein one or more of the coupling elements are preferably guided by means of deflecting elements (18), such as in the form of deflecting rollers, and wherein at least one deflecting element (18) preferably causes a deflection of one or more coupling elements by 90°.

9. The drive arrangement according to any one of the preceding claims, **characterized in that** the first shaft segment (7) comprises a first belt pulley (16) coupled to a middle drafting system roller (15) by means of a first belt drive (17), that the second shaft segment (8) comprises a second belt pulley (16) coupled to an intake roller (14) of the drafting system (3) by means of a second belt drive (17), and that the first shaft segment (7) or the second shaft segment (8) comprises a third belt pulley (16) connected for drive purposes to the take-off arrangement (10), the sliver intake arrangement (12), and/or the probe device (13) by means of a third belt drive (17).

10. The drive arrangement according to any one of the preceding claims, **characterized in that** the spinning preparation machine (2) comprises one or more features of the spinning preparation machine (2) according to any one of the following claims.

11. A drive arrangement for a spinning preparation machine (2), such as a draw frame, the spinning preparation machine (2) comprising a drafting system (3) having a plurality of drafting system rollers (14, 15, 24) for drafting a fiber strand (5) passing through the spinning preparation machine (2) in a transport direction (T), the drive arrangement (1) comprising a first drive (19) for driving at least one of the drafting system rollers (14, 15, 24), **characterized in that** the drive arrangement (1) comprises at least one second drive (20) for driving at least one of the remaining drafting system rollers (14, 15, 24), wherein the second drive (20) is disposed downstream of the drafting system (3) in said transport direction (T).

12. The drive arrangement according to claim 11, **characterized in that** the first drive (19) is connected for drive purposes to an input roller (14) or to a middle drafting system roller (15) of the drafting system (3) and/or that the second drive (20) is connected for drive purposes to an output roller (24) of the drafting system (3) and/or to at least one calender roller (25) disposed downstream of the drafting system in said transport direction (T).

13. The drive arrangement according to claim 11 or 12, **characterized in that** the first drive (19) is disposed upstream of the drafting system (3) in said transport direction (T).

14. The drive arrangement according to any one of the claims 11 through 13, **characterized in that** the spinning preparation machine (2) comprises a storage device disposed downstream of the drafting system (3) in the transport direction (T), such as in the form of a coiler plate (22), for laying down the drafted fiber strand (5), wherein the second drive (20) is disposed downstream of the storage device in the transport direction (T), wherein the storage device is preferably connected for drive purposes to a third drive (23), wherein the third drive (23) is preferably disposed downstream of the drafting system (3), particularly also of the storage device, in the transport direction (T), and wherein the longitudinal axis of a drive shaft (30) of the third drive (23) is preferably oriented vertically.

15. The drive arrangement according to any one of the claims 11 through 14, **characterized in that** the longitudinal axis of at least one drive shaft (7, 8) of the first drive (19) and/or the longitudinal axis of a drive shaft (31) of the second drive (20) is oriented horizontally and/or that the longitudinal axes of the drive shafts (7, 8; 31) of the first drive (19) and of the second drive (20) run parallel to each other.

## Revendications

1. Agencement d'entraînement d'une machine de préparation de filage (2), par exemple une étireuse, sachant que la machine de préparation de filage (2) présente un banc d'étirage (3) avec plusieurs cylindres (14, 15, 24) de banc d'étirage pour l'étirage d'un ensemble de fibres (5) traversant la machine de préparation de filage (2) dans un sens de transport (T), sachant que l'agencement d'entraînement (1) comporte un entraînement sous la forme d'un moteur à deux arbres (6), sachant que le moteur à deux arbres (6) comprend une première section d'arbre (7) et une seconde section d'arbre (8), sachant que la machine de préparation de filage (2) comporte une ou plusieurs unités fonctionnelles (9) agencées spatialement en amont du banc d'étirage (3) dans le sens de transport (T) indiqué, qui, pendant le fonctionnement de la machine de préparation de filage (2), servent au moins partiellement au transport et/ou au guidage de l'ensemble de fibres (5), **caractérisé en ce que** la première section d'arbre (7) est en relation d'entraînement avec au moins l'un des cylindres (14, 15, 24) de banc d'étirage et la seconde section d'arbre (8) est en relation d'entraînement avec au moins l'une des unités fonctionnelles (9).

2. Agencement d'entraînement selon la revendication précédente, **caractérisé en ce que** la machine de préparation de filage (2) comporte une ou plusieurs unités fonctionnelles (9) sous la forme d'un agencement de dévidage (10) pour le dévidage de l'ensemble de fibres (5) depuis un ou plusieurs pots de filature (11) et/ou sous la forme d'un agencement de rentrage de fil (12) pour le guidage de l'ensemble de fibres (5) durant son transport dans la direction du banc d'étirage (3) et/ou sous la forme d'un dispositif de balayage (13) pour le ruban de fibres (5).

3. Agencement d'entraînement selon l'une des revendications précédentes, **caractérisé en ce que** la première section d'arbre (7) ou la seconde section d'arbre (8) est en relation d'entraînement avec un cylindre de rentrage (14) du banc d'étirage (3) et la seconde section d'arbre (8) est en relation d'entraînement avec l'une ou plusieurs des unités fonctionnelles (9) citées.

4. Agencement d'entraînement selon l'une des revendications précédentes, **caractérisé en ce que** la première section d'arbre (7) ou la seconde section d'arbre (8) est en relation d'entraînement avec un cylindre central (15) de banc d'étirage et la seconde section d'arbre (8) est en relation d'entraînement avec l'une ou plusieurs des unités fonctionnelles (9) citées.

5. Agencement d'entraînement selon l'une des revendications précédentes, **caractérisé en ce que** le moteur à deux arbres (6) est disposé spatialement dans le sens de transport (T) entre le banc d'étirage (3) et l'une ou plusieurs des unités fonctionnelles (9).

6. Agencement d'entraînement selon l'une des revendications précédentes, **caractérisé en ce qu'**un cylindre délivreur (24) du banc d'étirage (3) est en relation d'entraînement avec un second moteur.

7. Agencement d'entraînement selon l'une des revendications précédentes, **caractérisé en ce que** les axes longitudinaux de la première section d'arbre (7) et de la seconde section d'arbre (8) s'étendent de manière colinéaire et/ou que les axes longitudinaux de la première section d'arbre (7) et de la seconde section d'arbre (8) sont orientés horizontalement et/ou que les axes longitudinaux de la première section d'arbre (7) et de la seconde section d'arbre (8) sont orientés perpendiculairement au sens de transport (T).

8. Agencement d'entraînement selon l'une des revendications précédentes, **caractérisé en ce que** la première section d'arbre (7) et/ou la seconde section d'arbre (8) présente(nt) un élément de transmission de force, par exemple sous la forme d'une poulie à courroie (16), sachant que l'élément de transmission de force est en relation d'entraînement avec un cylindre de rentrage (14) du banc d'étirage (3), un cylindre central (15) de banc d'étirage (3), l'agencement de dévidage (10), l'agencement de rentrage de fil (12) et/ou le dispositif de balayage (13) à l'aide d'un ou de plusieurs éléments de couplage, en particulier à l'aide d'une ou de plusieurs transmissions par courroie (17), sachant que l'un ou plusieurs des éléments de couplage sont guidés de préférence par des éléments de renvoi (18), par exemple sous forme de poulies de renvoi, et sachant qu'au moins un élément de renvoi (18) provoque de préférence une déviation de 90° de l'un ou de plusieurs éléments de couplage.

9. Agencement d'entraînement selon l'une des revendications précédentes, **caractérisé en ce que** la première section d'arbre (7) présente une première poulie à courroie (16), qui, à l'aide d'une première transmission par courroie (17), est couplée avec un cylindre central (15) de banc d'étirage, que la seconde section d'arbre (8) présente une seconde poulie à courroie (16), qui, à l'aide d'une seconde transmission par courroie (17), est couplée avec un cylindre de rentrage (14) du banc d'étirage (3) et que la première section d'arbre (7) ou la seconde section d'arbre (8) présente une troisième poulie à courroie (16), qui, à l'aide d'une troisième transmission par courroie (17), est en relation d'entraînement avec l'agencement de dévidage (10), l'agencement de rentrage de fil (12) et/ou le dispositif de balayage (13).

10. Agencement d'entraînement selon l'une des revendications précédentes, **caractérisé en ce que** la machine de préparation de filage (2) présente une ou plusieurs caractéristiques de la machine de préparation de filage (2) selon l'une des revendications suivantes.

11. Agencement d'entraînement d'une machine de préparation de filage (2), par exemple une étireuse, sachant que la machine de préparation de filage (2) présente un banc d'étirage (3) avec plusieurs cylindres (14, 15, 24) de banc d'étirage pour l'étirage d'un ensemble de fibres (5) traversant la machine de préparation de filage (2) dans un sens de transport (T), et sachant que l'agencement d'entraînement (1) comporte un premier entraînement (19) pour l'entraînement d'au moins l'un des cylindres (14, 15, 24) de banc d'étirage, **caractérisé en ce que** l'agencement d'entraînement (1) comporte au moins un second entraînement (20) pour l'entraînement d'au moins l'un des autres cylindres (14, 15, 24) de banc d'étirage, sachant que le second entraînement (20) est agencé spatialement en aval du banc d'étirage (3) dans le sens de transport (T) indiqué.

12. Agencement d'entraînement selon la revendication 11, **caractérisé en ce que** le premier entraînement (19) est en relation d'entraînement avec un cylindre de rentrage (14) ou un cylindre central (15) du banc d'étirage (3) et/ou que le second entraînement (20) est en relation d'entraînement avec un cylindre délivreur (24) du banc d'étirage (3) et/ou au moins un cylindre de calandre (25) agencé en aval du banc d'étirage dans le sens de transport (T) indiqué.

13. Agencement d'entraînement selon la revendication 11 ou 12, **caractérisé en ce que** le premier entraînement (19) est agencé spatialement en amont du banc d'étirage (3) dans le sens de transport (T) indiqué.

14. Agencement d'entraînement selon l'une des revendications 11 à 13, **caractérisé en ce que** la machine de préparation de filage (2) possède un dispositif de dépose agencé en aval du banc d'étirage (3) dans le sens de transport (T) indiqué, par exemple sous la forme d'un disque de dépose (22), pour la dépose de l'ensemble de fibres (5) étiré, sachant que le second entraînement (20) est agencé spatialement en aval du dispositif de dépose dans le sens de transport (T), sachant que le dispositif de dépose est de préférence en relation d'entraînement avec un troisième entraînement (23), sachant que le troisième entraînement (23) est agencé spatialement de préférence en aval du banc d'étirage (3), en particulier aussi du dispositif de dépose, dans le sens de transport (T) indiqué, et sachant que l'axe longitudinal d'un arbre d'entraînement (30) du troisième entraînement (23) est de préférence orienté verticalement.

15. Agencement d'entraînement selon l'une des revendications 11 à 14, **caractérisé en ce que** l'axe longitudinal d'au moins un arbre d'entraînement (7, 8) du premier entraînement (19) et/ou l'axe longitudinal d'un arbre d'entraînement (31) du second entraînement (20) est/sont orienté(s) horizontalement et/ou que les axes longitudinaux des arbres d'entraînement (7, 8 ; 31) du premier entraînement (19) et du second entraînement (20) sont parallèles l'un à l'autre.
